# EUROPÄISCHE PATENTSCHRIFT

(11) **EP 2 672 311 B1**
(45) Veröffentlichungstag und Bekanntmachung des Hinweises auf die Patenterteilung: **28.02.2018**
(21) Anmeldenummer: 13170439.7
(22) Anmeldetag: 04.06.2013
(51) Int. Cl.: G02F 1/025, G02F 1/01, H04B 10/50

(54) **Verfahren zur Selektion von optischen Pulsen**
Method for selecting optical pulses
Procédé de sélection d'impulsions optiques

(30) Priorität: 05.06.2012 DE 102012209485
(43) Veröffentlichungstag der Anmeldung: 11.12.2013
(73) Patentinhaber: Forschungsverbund Berlin e.V., 12489 Berlin (DE)
(72) Erfinder: Hoffmann, Thomas, 13437 Berlin (DE); Liero, Armin, 13187 Berlin (DE); Klehr, Andreas, 13156 Berlin (DE); Schwertfeger, Sven, 10247 Berlin (DE)
(74) Vertreter: Gulde & Partner

(56) Entgegenhaltungen:
- WO-A1-2010/052176
- US-A- 5 798 856
- KAMAN V ET AL: "Integrated tandem traveling-wave electroabsorption modulators for >100 Gbit/s OTDM applications", IEEE PHOTONICS TECHNOLOGY LETTERS, IEEE SERVICE CENTER, PISCATAWAY, NJ, US, Bd. 12, Nr. 11, 1. November 2000 (2000-11-01), Seiten 1471-1473, XP011426330, ISSN: 1041-1135, DOI: 10.1109/68.887679
- BEALS M ET AL: "Process flow innovations for photonic device integration in CMOS", PROCEEDINGS OF THE SPIE, Bd. 6898, 689804, 7. Februar 2008 (2008-02-07), Seiten 1-14, XP055142209, The International Society for Optical Engineering USA ISSN: 0277-786X, DOI: 10.1117/12.774576

## Beschreibung

Die vorliegende Erfindung betrifft eine Vorrichtung und ein Verfahren zur Selektion von optischen Pulsen.

### Stand der Technik

Eine Vielzahl von Anwendungen, z. B. bestimmte Bereiche der Lasermaterialbearbeitung, der Photo- und Displaytechnik, von biomedizinischen Screeningtechniken auf der Basis der Fluoreszenzspektroskopie, Laserentfernungsmessung, LIDAR sowie der optischen Analytik erfordern die Bereitstellung von sehr kurzen optischen Impulsen (bis in den Femtosekunden-Bereich) geringer Folgefrequenz (bis zu 100 MHz). Da übliche Kurzpulslasersysteme, z. B. modengekoppelte Laser, Impulse mit hoher Folgefrequenz erzeugen, benötigt man schnelle optische Modulatoren (Pulspicker), die in der Lage sind, aus den schnellen Pulszügen einzelne Impulse zu selektieren und zu transmittieren, d. h. eine Frequenzteilung zu erreichen. Dann können diese vereinzelten Impulse getrennt weiterverarbeitet werden. Im Gegensatz zu rein modengekoppelten Lasersystemen, bieten Systeme mit Modulator die Möglichkeit, Pulse nahezu beliebiger Form, Länge und Wiederholrate zu erzeugen.

Zur Pulsselektion ist die Verwendung von Pockels-Zellen bekannt, die mit nichtlinearen, spannungsabhängigen optischen Kristallen arbeiten. Auch Kerr-Zellen mit feldabhängiger Polarisation sind bekannt. Hierfür werden nachteilhafterweise hohe Spannungen benötigt. Dabei sind die Kapazitäten, die entsprechend umgeladen werden müssen, ebenfalls sehr hoch. Damit ist die erreichbare minimale Pulsweite (und damit auch die maximale Eingangs-Pulsfolgefrequenz) als auch die Folgefrequenz des Schalters (und damit die maximale Ausgangs-Pulsfolgefrequenz) stark begrenzt. Es lassen sich Pulsweiten von einigen 10 ns (typisch 30 ns) erreichen. Die Folgefrequenz liegt bei einigen MHz.

Weiterhin ist zur Pulsselektion die Verwendung von akusto-optischen Modulatoren bekannt. Durch Anlegen einer HF-Spannung wird ein stehendes Ultraschallfeld erzeugt. Dieses Feld lenkt dann die optischen Laserimpulse ab. Zum Aufbau eines stehenden Feldes wird Zeit benötigt. Damit lassen sich Impulse von minimal einigen ns erreichen. Die Folgefrequenz ist durch die maximale mittlere Leistung begrenzt, so dass man auch nicht wesentlich über 10 MHz erreicht.

Weiterhin ist zur Pulsselektion die Verwendung von elektro-optischen Modulatoren bekannt. Der einfachste Fall der elektro-optischen Modulatoren besteht aus einem Kristall, z. B.

Lithiumniobat, bei dem der Brechungsindex von der Stärke des angelegten elektrischen Feldes abhängt. Damit hängt die Transparenz des Kristalls von der angelegten Feldstärke ab. Elektrooptische Kristalle ändern somit ihre optische Dicke instantan als Funktion der Stärke eines angelegten äußeren elektrischen Feldes. Der Effekt ist abhängig von der Polarisation der einfallenden Strahlung. Für zwei orthogonal zueinander polarisierte Strahlen beträgt der Gangunterschied gerade dann 180°, wenn die sogenannte λ/2-Spannung angelegt wird. Bei entsprechender Kristalljustierung dreht sich für linear polarisiert einfallendes Licht die Polarisationsebene um 90°. Ein Polarisator entfernt das Licht vollständig aus dem Strahlengang. Durch Variation der anliegenden Spannung kann die Intensität des durchgehenden Lichtes moduliert werden. Der Modulator kann somit in einfacher Weise als Phasenverzögerungsplatte mit elektrisch einstellbarer Verzögerung verstanden werden. Somit kann durch Variation der Spannung eine optische Pulsselektion erfolgen.

Weiterhin ist zur Pulsselektion die Verwendung eines integriert elektro-optischen Lichtmodulators auf Wellenleiterbasis bekannt. Das Basiselement ist ein phasengekoppelter Mach-Zehnder Amplitudenmodulator auf der Basis des ferroelektrischen Kristallmaterials Lithiumniobat. Die Modulation erfolgt durch elektrooptische Verstimmung des Wellenleiter-Interferometers infolge einer an das Elektrodensystem angelegten elektrischen Spannung.

Bei den beschriebenen Lichtmodulatoren besteht der Nachteil, dass sie relativ groß und justageaufwändig sind, und dass die Modulationsfrequenz zum Separieren einzelner Impulse nicht groß genug ist.

US 2005/0206989 A1 offenbart einen multi-bandgap Modulator, der aufgrund separat ansteuerbarer Bereiche unterschiedlicher Bandlücke einen größeren Wellenlängenbereich aufweist bzw. Chirp kompensieren kann.

EP 1 065 765 A2 beschreibt einen Laser mit verbesserter Modulation über einen großen Wellenlängenbereich. Dazu werden Laserdiode und Modulator in einer Struktur, d. h. auf einem gemeinsamen Substrat aufgewachsen, wobei der Modulator mindestens einen ersten und einen zweiten Bereich aufweist, bei denen jeweils durch Anlegen einer Rückwärtsspannung eine Modulation des Lichts der Laserdiode erreicht wird.

US 2003/0180054 A1 offenbart einen optischen Modulator für ultraschnelle Pulse, wobei Treiberschaltung und Modulator auf einem gemeinsamen Substrat angeordnet sind und der Abstand zwischen der Treiberschaltung und dem optischen Modulator kleiner als ein Zehntel der Wellenlänge der Modulationsfrequenz ist. Durch Verringerung der Induktivität der elektrischen Leitungen zwischen Treiberschaltung und optischem Modulator kann die maximale Modulationsfrequenz erhöht werden.

Nachteilig an den vorgenannten Modulatoren ist jedoch, dass sich je nach Intensität der Pulse in der Pulspickersektion - d. h. im Modulator - aufgrund von Rekombinationsprozessen Ladungsträger bilden können, die zu einer ungewollten Transparenz der Pulspickersektion führen, obwohl keine Ladungsträger über die Kontakte injiziert werden. Somit verfügt der optische Modulator über eine relativ geringe Durchschlagsfestigkeit.

EP 1 210 754 B1 beschreibt einen elektro-optischen Modulator mit einem großen Extinktionsverhältnis und einer verbesserten nichtlinearen Extinktionskurve, wobei eine Halbleiterlaserquelle, der elektro-optische Modulator sowie ein Halbleiterverstärker auf einem Substrat integriert sind. Aus diesem Grund kann diese Vorrichtung nicht zur Modulation extern erzeugter Laserpulse dienen, da diese nicht eingekoppelt werden können. Darüber hinaus lassen sich mit der Vorrichtung lediglich geringe Leistungen modulieren.

US 5 798 856 A offenbart einen optischen Laser-Pulsgenerator für die Glasfaser-Kommunikation, welcher eine Wellenpaket-Verbreiterung infolge Dispersion reduziert.

KAMAN V., et al.: "Integrated Tandem Traveling-Wave Electroabsorption Modulators for >100 Gbit/s OTDM Applications", IEEE Photonics Technology Letters, Bd. 12, Nr. 11, 1. November 2010, WO 2010/052176 und Beals M. et al.: Process Flow Innovations for Photonic Device Integration in CMOS, Proc. Of SPIE, Vol. 6898, 689804, 2008, sind weitere Dokumente des standes der Technik.

### Offenbarung der Erfindung

Erfindungsgemäß wird ein Verfahren zur Selektion von optischen Pulsen mit verbesserter Flankensteilheit mit folgenden Verfahrensschritten offenbart: Einkoppeln einer Pulsfolge in den optischen Wellenleiter; steuerbares Absorbieren von Teilen der Pulsfolge im ersten elektro-optischen Modulator; steuerbares Absorbieren von Teilen der modulierten Pulsfolge im zweiten elektro-optischen Modulator, wobei der erste Modulator auf Transparenz geschaltet ist, während der zweite Modulator von Absorption auf Transparenz umgeschaltet wird, und wobei der zweite Modulator auf Transparenz geschaltet ist, während der erste Modulator von Transparenz auf Absorption umgeschaltet wird.

Vorzugsweise ist dabei eine Flanke, mit welcher der erste Modulator von Transparenz auf Absorption umschaltet, steiler als eine Flanke, mit welcher der zweite Modulator von Transparenz auf Absorption umschaltet; ferner ist eine Flanke, mit welcher der zweite Modulator von Absorption auf Transparenz umschaltet, steiler als eine Flanke, mit welcher der erste Modulator von Absorption auf Transparenz umschaltet.

Vorzugsweise drückt im vorgenannten Sinne die Steilheit einer Flanke den absoluten Betrag der ersten Ableitung der Dämpfung nach der Zeit aus, wobei die Dämpfung jene Eigenschaft des Modulators ist, eine vom Modulator durchgelassene Lichtleistung gegenüber der in den Modulator eingetretenen Lichtleistung zu reduzieren. Vorzugsweise entspricht die maximal mögliche Dämpfung der in den im Zustand der Absorption befindlichen Modulator eingetretenen Lichtleistung, und demnach entspricht die minimal mögliche Dämpfung der Differenz aus der in den im Zustand der Transparenz befindlichen Modulator eintretenden Lichtleistung und der von dem im Zustand der Transparenz befindlichen Modulator durchgelassenen Lichtleistung, wobei vorzugsweise diese Differenz praktisch Null ist.

Vorzugsweise ist der Beginn einer Flanke dadurch gegeben, dass sich die vom Modulator durchgelassene Lichtleistung innerhalb eines beliebig kleinen jedoch größer Null vorgebbaren Zeitintervalls um einen beliebig vorgebbaren Wert ungleich Null ändert, wobei der Beginn der Flanke dem Beginn des Zeitintervalls entspricht.

Vorzugsweise ist das Ende einer Flanke dadurch gegeben, dass sich die vom Modulator durchgelassene Lichtleistung innerhalb eines beliebig kleinen jedoch größer Null vorgebbaren Zeitintervalls um einen beliebig vorgebbaren Wert ungleich Null ändert, wobei das Ende der Flanke dem Ende des Zeitintervalls entspricht.

Vorteil ist die verbesserte Flankensteilheit sowohl beim Schließen als auch beim Öffnen des Lichtkanals.

Auch ist es möglich, dass eine periodische Pulsfolge in den optischen Wellenleiter eingekoppelt wird, wobei die Periodendauer der Pulsfolge größer als der zeitliche Abstand zwischen einem (vorzugsweise ersten) Zeitpunkt, an dem der zweite Modulator von Absorption auf Transparenz umgeschaltet wird, und einem (vorzugsweise zweiten) Zeitpunkt, an dem der erste Modulator von Transparenz auf Absorption umgeschaltet wird, ist.

Vorteil der Periodizität ist die Energiekonzentration auf kurze Zeitdauer und somit Erzeugung hoher punktueller Intensität bei moderater Dauerlast und moderater Wärmeabführung.

Saug-Widerstand des passiven Bauteils, ergibt sich beim zweiten elektrischen Tor auch die asymmetrische Flankensteilheit.

Auch ist es denkbar, die steilflankige Schließ- und Öffnungsansteuerung mittels symmetrischer Spannungsversorgung und zweier in Gegentakt arbeitender Transistoren zu realisieren, so dass im Öffnungszustand (Transparenz) der aktive Pol des Tors durch den invertierenden Transistor auf negative Spannungsversorgung gezogen wird, und im Schließzustand (Absorption) der aktive Pol des Tores durch den nichtinvertierenden Transistor auf positive Spannungsversorgung (Plus-Potential) gezogen wird. Somit sind keine weiteren Widerstände nötig, um passiv in die Gegenrichtung ziehen zu müssen, sondern nur noch aktive niederohmige Schalter (in Gegentakt geschaltete Transistoren) nötig, welche infolge ihrer Niederohmigkeit parasitäre Kapazitäten besser überwinden und somit steile Flanken in beiden Richtungen ermöglichen. Somit wäre erreicht, dass mit nur einem Tor sowohl eine schnelle Startflanke als auch eine schnelle Endflanke möglich wird. Die Realisierung dieser Variante erfolgt jedoch unter der Randbedingung, dass die dort benötigten p-Kanal-, bzw. pnp-Transisoren vergleichsweise schlechtere Schalteigenschaften besitzen, als beispielsweise n-Kanal-, bzw. npn-Transistoren. Die Schaltvariante unter Verwendung von n-Kanal- bzw. npn-Transistoren ist daher bevorzugt.

Es ist bevorzugt, dass der optische Wellenleiter einen ersten Bereich zur Lichteinkopplung und einen zweiten Bereich zur Lichtauskopplung aufweist, wobei der erste Modulator und der zweite Modulator zwischen dem ersten Bereich zur Lichteinkopplung und dem zweiten Bereich zur Lichtauskopplung angeordnet sind.

Vorteil ist das Nutzen der Vorrichtung als zusätzliches Element in einem Lichtweg, also auch das hintereinander schalten können. Somit können auch extern erzeugte Laserpulse moduliert werden. Auch ist es möglich, dass der erste Modulator und/oder der zweite Modulator durch eine Halbleiterlaser-Struktur ausgebildet ist.

Die Halbleiterlaser-Struktur kann auch eine Laserdiode umfassen, die preiswert herstellbar ist.

Auch ist es möglich, dass der erste Modulator und/oder der zweite Modulator durch eine Ridge-Waveguide-Halbleiterlaser-Struktur ausgebildet sind. Der Ridge-Waveguide dient der Wellenführung.

Vorteil ist die kompakte Bauweise und infolge kleiner Abmessungen die Fähigkeit, höchste Frequenzen behandeln zu können.

Auch ist es möglich, dass die Vorrichtung als monolithisch integriertes elektro-optisches Element ausgebildet ist.

Mit anderen Worten ausgedrückt, kann sowohl der optische Wellenleiter, die elektro-optischen Modulatoren als auch die elektronische Ansteuerung der elektro-optischen Modulatoren in einem mehrschichtigen, festen Block integriert sein. Die Schichten können dabei Metall, Dielektrikum oder Halbleitermaterial umfassen. Die Modulatoren als auch deren Ansteuerschaltung oder Teile der Ansteuerschaltung und der Wellenleiter befinden sich dabei in unterschiedlichen Abschnitten eines monolithisch ausgebildeten Substrats.

Vorteil ist infolge einheitlicher Herstellung die Kontakt- und Verbindungssicherheit der einzelnen Elemente, gerade auch im Hinblick auf Stabilität und Funktionssicherheit.

Auch ist es möglich, dass weiterhin ein elektro-optischer Verstärker vorgesehen ist, der mit dem Wellenleiter verbunden ist.

Vorzugsweise umfasst dieser elektro-optische Verstärker ebenfalls eine integrierte Halbleiterlaser-Struktur mit elektrischen Anschlüssen. Der Verstärker ist vorzugweise (in Bezug auf die Lichtausbreitungsrichtung) hinter den elektro-optischen Toren angeordnet.

Vorteil ist die Möglichkeit, die vorhandene Lichtleistung nach der Modulation erhöhen zu können.

Erfindungsgemäß wird ein Verfahren zur Selektion von optischen Pulsen mit verbesserter Flankensteilheit mit folgenden Verfahrensschritten offenbart: Einkoppeln einer Pulsfolge in den optischen Wellenleiter; steuerbares Absorbieren von Teilen der Pulsfolge im ersten elektro-optischen Modulator; steuerbares Absorbieren von Teilen der modulierten Pulsfolge im zweiten elektro-optischen Modulator, wobei der erste Modulator auf Transparenz geschaltet ist, während der zweite Modulator von Absorption auf Transparenz umgeschaltet wird, und wobei der zweite Modulator auf Transparenz geschaltet ist, während der erste Modulator von Transparenz auf Absorption umgeschaltet wird.

Vorzugsweise ist dabei eine Flanke, mit welcher der erste Modulator von Transparenz auf Absorption umschaltet, steiler als eine Flanke, mit welcher der zweite Modulator von Transparenz auf Absorption umschaltet; ferner ist eine Flanke, mit welcher der zweite Modulator von Absorption auf Transparenz umschaltet, steiler als eine Flanke, mit welcher der erste Modulator von Absorption auf Transparenz umschaltet.

Vorzugsweise drückt im vorgenannten Sinne die Steilheit einer Flanke den absoluten Betrag der ersten Ableitung der Dämpfung nach der Zeit aus, wobei die Dämpfung jene Eigenschaft des Modulators ist, eine vom Modulator durchgelassene Lichtleistung gegenüber der in den Modulator eingetretenen Lichtleistung zu reduzieren. Vorzugsweise entspricht die maximal mögliche Dämpfung der in den im Zustand der Absorption befindlichen Modulator eingetretenen Lichtleistung, und demnach entspricht die minimal mögliche Dämpfung der Differenz aus der in den im Zustand der Transparenz befindlichen Modulator eintretenden Lichtleistung und der von dem im Zustand der Transparenz befindlichen Modulator durchgelassenen Lichtleistung, wobei vorzugsweise diese Differenz praktisch Null ist.

Vorzugsweise ist der Beginn einer Flanke dadurch gegeben, dass sich die vom Modulator durchgelassene Lichtleistung innerhalb eines beliebig kleinen jedoch größer Null vorgebbaren Zeitintervalls um einen beliebig vorgebbaren Wert ungleich Null ändert, wobei der Beginn der Flanke dem Beginn des Zeitintervalls entspricht.

Vorzugsweise ist das Ende einer Flanke dadurch gegeben, dass sich die vom Modulator durchgelassene Lichtleistung innerhalb eines beliebig kleinen jedoch größer Null vorgebbaren Zeitintervalls um einen beliebig vorgebbaren Wert ungleich Null ändert, wobei das Ende der Flanke dem Ende des Zeitintervalls entspricht.

Vorteil ist die verbesserte Flankensteilheit sowohl beim Schließen als auch beim Öffnen des Lichtkanals.

Auch ist es möglich, dass eine periodische Pulsfolge in den optischen Wellenleiter eingekoppelt wird, wobei die Periodendauer der Pulsfolge größer als der zeitliche Abstand zwischen einem (vorzugsweise ersten) Zeitpunkt, an dem der zweite Modulator von Absorption auf Transparenz umgeschaltet wird, und einem (vorzugsweise zweiten) Zeitpunkt, an dem der erste Modulator von Transparenz auf Absorption umgeschaltet wird, ist.

Vorteil der Periodizität ist die Energiekonzentration auf kurze Zeitdauer und somit Erzeugung hoher punktueller Intensität bei moderater Dauerlast und moderater Wärmeabführung.

Auch ist es denkbar, dass die Periodendauer der Pulsfolge kleiner als der zeitliche Abstand zwischen einem (vorzugsweise ersten) Zeitpunkt, an dem der erste Modulator von Absorption auf Transparenz umgeschaltet wird (erste, nicht steile Flanke), und einem (vorzugsweise zweiten) Zeitpunkt, an dem der zweite Modulator von Absorption auf Transparenz umgeschaltet wird (erste, steile Flanke), ist, wobei der zweite Zeitpunkt dem ersten Zeitpunkt folgt.

Vorteil ist die Behandlung kürzester Pulsfolgen trotz moderater elektrischer Schaltgeschwindigkeit.

### Zeichnungen

Die Erfindung wird anhand der Zeichnungen und nachfolgenden Beschreibung näher erläutert. Es zeigen:
- Fig. 1: eine schematische Darstellung einer bevorzugten Ausführungsvariante der erfindungsgemäßen Vorrichtung in Draufsicht,
- Fig. 2: das Pulsregime vor, zwischen und hinter beiden Modulatoren nach dem erfindungsgemäßen Verfahren,
- Fig. 3: eine schematische Darstellung einer ersten bevorzugten Ausführungsvariante der Ansteuerungsschaltungen für die Modulatoren,
- Fig. 4: eine schematische Darstellung einer zweiten bevorzugten Ausführungsvariante der Ansteuerungsschaltungen für die Modulatoren, und
- Fig. 5: eine schematische, perspektivische Darstellung einer bevorzugten Ausführungsvariante der erfindungsgemäßen Vorrichtung.

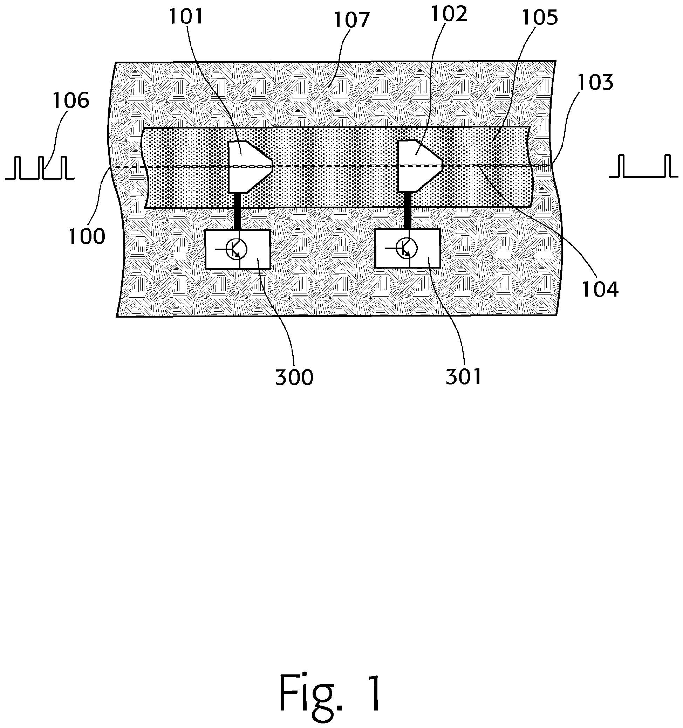

Figur 1 zeigt die erfindungsgemäße Vorrichtung gemäß einer bevorzugten Ausführungsvariante der Erfindung mit einem optischen Wellenleiter 105 (Achse 104 erstreckt sich entlang der Lichtausbreitungsrichtung), mit einer ersten Facette 100 zur Lichteinkopplung, einer zweiten Facette 103 zur Lichtauskopplung, einem ersten Ridge-Waveguide-Modulator 101 und einem zweiten Ridge-Waveguide-Modulator 102. Entlang der Lichtausbreitungsrichtung 104, zwischen erster Facette 100 und zweiter Facette 103 sind die erste Wellenleiter-Sektion als erster elektro-optischer Modulator 101 und die zweite Wellenleiter-Sektion als zweiter elektro-optischer Modulator 102 integriert.

Die Modulatoren 101 und 102 können auch als elektro-optische Tore oder Sektionen bezeichnet werden, da sie den Lichtweg schließen und öffnen können. Die Pulse 106 an der ersten Facette 100 stellen im Zusammenhang mit den Pulsen an der zweiten Facette 103 die Funktion des Pulspickers dar, welcher den mittleren Puls (der dargestellten Pulsfolge) unterdrückt, um aus drei Pulsen lediglich zwei Pulse zu selektieren.

Es werden optische Pulse 106 in das Halbleiterbauelement 107 mit integriertem Wellenleiter 105 eingekoppelt, durch die zwei Sektionen 101, 102 geleitet und in jeder Sektion durch je eine Sektion elektrisch gesteuerten Transparenz- oder Absorptionszustand zur Auskopplung gebracht oder absorbiert. Kennzeichnend für die Erfindung ist, dass die erste Treiberschaltung 300 und die zweite Treiberschaltung 301 ausgebildet sind, den ersten Modulator 101 und den zweiten Modulator 102 zeitlich versetzt anzusteuern.

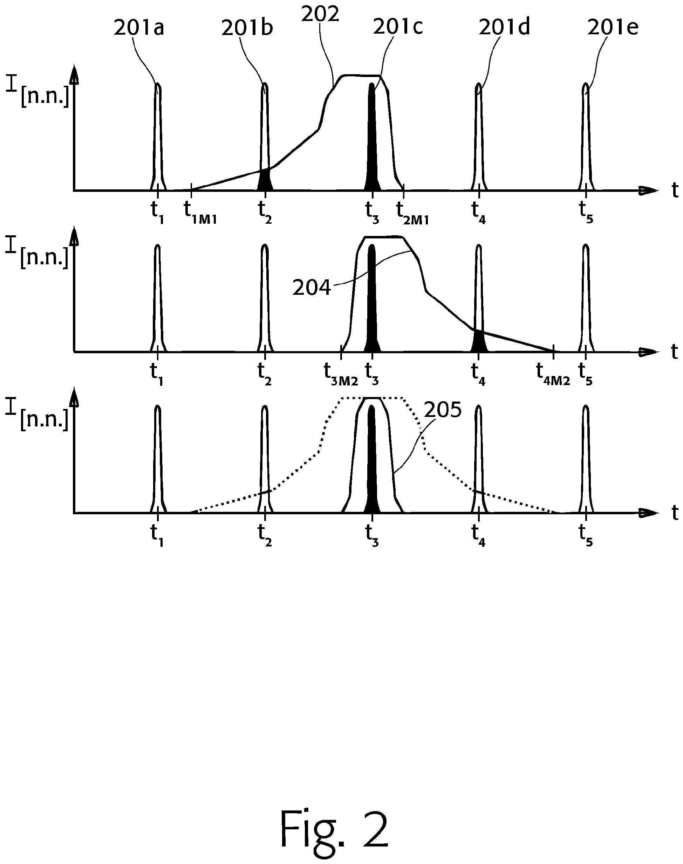

Figur 2 zeigt Intensitäts-Zeit-Diagramme im Zeitbereich t, mit einzelnen Eingangspulsen 201a, 201b, 201c, 201d, 201e, auch Pulsregime genannt, und resultierendem Ausgangspuls 201c.

Das obere Diagramm stellt die Transparenzfunktion des ersten Modulators 101 dar, skizziert als Hüllkurve 202, welche den skizzierten ersten Puls 201a, vierten Puls 201d und fünften Puls 201e komplett ausblendet und den zweiten Puls 201b teilweise und den dritten Puls 201c vollständig durchlässt (Transparenz). Der schematisch dargestellte schwarze Füllstand innerhalb eines schwarz konturierten mit weißer Füllfläche skizzierten Pulses stellt gemäß dessen Füllstandshöhe die Nicht-Dämpfung des jeweiligen Pulses dar. Mit anderen Worten: komplett schwarzer Füllstand bedeutet ungehindertes Durchqueren des Lichtkanals und somit Transparentschaltung des Modulators.

Der Zeitpunkt t_{1M1} ist am Beginn der steigenden Startflanke der Hüllkurve 202, beispielsweise definierbar als Zeitpunkt, zu welchem ein bestimmter Intensitätsschwellwert überschritten wird.

Der Zeitpunkt t_{2M1} ist am Ende der fallenden Endflanke der Hüllkurve 202, beispielsweise definierbar als Zeitpunkt, zu welchem ein bestimmter Intensitätsschwellwert unterschritten wird.

Das mittlere Diagramm stellt die Transparenzfunktion des zweiten Modulators 102 dar, skizziert als Hüllkurve 204.

Das untere Diagramm stellt die aus beiden Modulatoren 101, 102 resultierende Transparenzfunktion dar, skizziert als Hüllkurve 205. Die Hüllkurve 205 ist das Resultat der beiden auf Steilheit optimierten Flanken, so dass die Hüllkurve 205 so dicht wie möglich den durchzulassenden, mit schwarzem Füllstand, Puls 201c umkleidet, während die gestrichelte Linie die zeitliche Überlagerung beider Hüllkurven 202, 204 andeutet, aus denen die Hüllkurve 205 resultiert.

Anhand der Hüllkurve 202 ist zu erkennen, dass die nicht steile Öffnungsflanke, von Absorption auf Transparenz umschaltend, eine längere Attack Zeit in Anspruch nimmt als die Release Zeit der steilen Schließflanke, von Transparenz auf Absorption umschaltend.

Wird die Zeit zwischen zwei Punkten, welche durch das Berühren der Zeitachse durch den Beginn und das Ende einer jeden Hüllkurve 202, 204, 205 entstehen, als Transparenzphase bezeichnet, so ist deutlich erkennbar, dass die resultierende Transparenzphase im unteren Diagramm infolge Hüllkurve 205 erfindungsgemäß deutlich verkürzt ist infolge zeitlich versetzter Ansteuerung der beiden Sektionen 101 und 102.

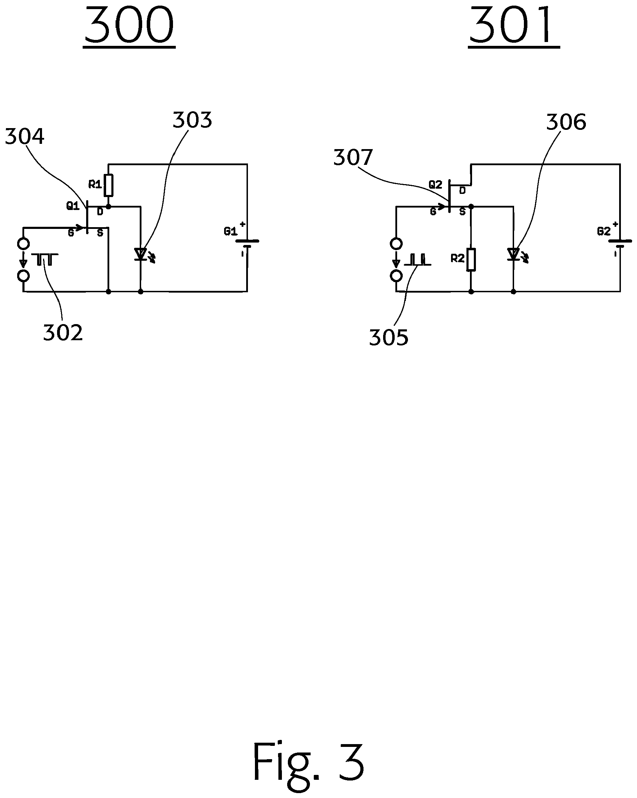

Figur 3 stellt schematisch zwei Varianten einer elektrischen Schaltung zur Ansteuerung des elektro-optischen Tores dar, welche vorzugsweise im Halbleiterelement integriert sind.

Die Variante 300 zeigt ein aktives Element 304, vorzugsweise einen Transistor Q1, der mit einem elektrischen Modulationssignal 302 versorgt wird und dieses Signal 302 verstärkt zum Treiben eines elektro-optischen Tores 303, vorzugsweise ein RW-Modulator. G1 ist die Stromversorgung der Schaltung.

Die Signalform des Modulationssignals 302 kann grundsätzlich beliebig sein, doch vorzugsweise einen hysterese-, sinus- oder puls-förmigen Spannungs-Zeit-Verlauf aufweisen.

Die Variante 301 zeigt ein aktives Element 307, vorzugsweise einen Transistor Q2, der mit einem elektrischen Modulationssignal 305 versorgt wird und dieses Signal 305 verstärkt zum Treiben des elektro-optischen Tores 306, vorzugsweise ein RW-Modulator. G2 ist die Stromversorgung der Schaltung.

In Zusammenhang mit dem oberen Pulsregime der Figur 2 ist die Schaltung 300 vorzugsweise als Ansteuerung des zweiten Modulators 102 mit Hüllkurve 204 zu verwenden, während die Schaltung 301 vorzugsweise als Ansteuerung des ersten Modulators 101 mit Hüllkurve 202 zu verwenden ist.

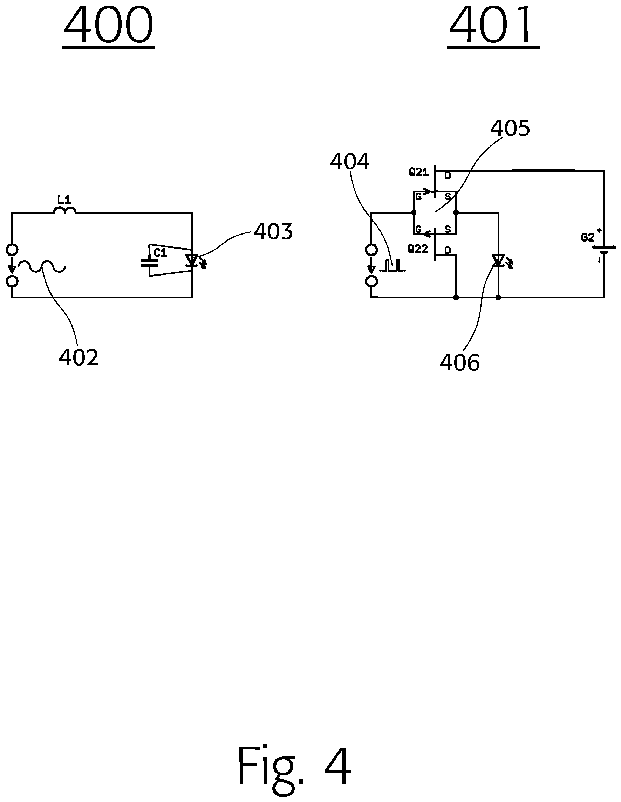

Figur 4 stellt im Schaltbild 400 eine Anordnung dar, bei der der Modulator in einen Resonanzkreis einbezogen ist, mit einem elektrischen Steuersignal 402, welches baubedingt auf eine dem elektro-optischen Tor 403, vorzugsweise RW-Modulator, innewohnende parasitäre Induktivität L1 und parasitäre Kapazität C1 trifft. Der Vorteil dieser Anordnung ist, dass die geschwindigkeitsmindernde Wirkung der parasitären Elemente durch Resonanzbetrieb vermieden wird. Das Schaltbild 401 zeigt ein pulsförmiges Steuersignal 404, welches ein aktives Element 405 aus zwei Transistoren Q21, Q22 steuert, um ein elektro-optisches Tor 406, vorzugsweise einen RW-Modulator, zu treiben. G2 ist die Stromversorgung der Schaltung. Schaltbild 401 skizziert die Schaltung zweiter Transistoren im Gegentakt, wobei die symmetrische Stromversorgung nicht dargestellt, jedoch denkbar ist. Ebenso denkbar ist die Integration eines Bootstrap-Kondensators zwischen Source S und Gate G, um die parasitäre Kapazität des Transistors noch besser kompensieren zu können.

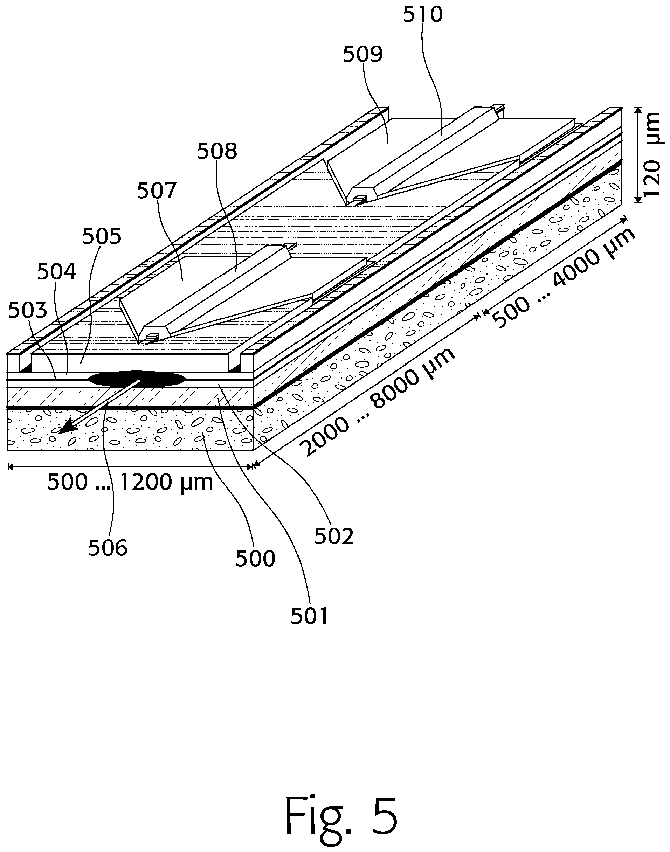

Figur 5 zeigt eine schematische, perspektivische Darstellung einer bevorzugten Ausführungsvariante der erfindungsgemäßen Vorrichtung. Insbesondere offenbart Figur 5 ein Substrat 500 mit horizontal aufgeschichteten Funktionselementen wie z. B. untere Mantelschicht 501, unterer Teil des Wellenleiters 502, aktive Schicht 503 in welcher sich das Licht in Ausbreitungsrichtung 506 ausbreitet, oberer Teil des Wellenleiters 504, obere Mantelschicht 505. Ein erster Modulator 507 und ein zweiter Modulator 509 sind entlang eines Lichtausbreitungskanals 506 voneinander beabstandet angeordnet. Der Modulator 507 weist einen ersten Rippenwellenleiter 508 und der Modulator 509 weist einen zweiten Rippenwellenleiter 510 auf. Jeder Modulator 507, 509 umfasst elektrisch leitendes Material und ist dadurch elektrisch mit je einer (hier nicht dargestellten) Steuerschaltung (siehe Fig. 3 und 4) verbunden.

Der erste elektro-optische Modulator 507 und der zweite elektro-optische Modulator 508 werden erfindungsgemäß zeitlich versetzt angesteuert, so dass die Durchlasszeit (d.h. beide Modulatoren 507, 509 sind transparent) der erfindungsgemäßen Vorrichtung deutlich reduziert werden kann.

### Bezugszeichenliste

- 100: Bereich zur Lichteinkopplung
- 101: erstes elektro-optisches Tor (erster Modulator)
- 102: zweites elektro-optisches Tor (zweiter Modulator)
- 103: Bereich zur Lichtauskopplung
- 104: Achse entlang des optischen Wellenleiters (Lichtausbreitungsrichtung)
- 105: optischer Wellenleiter
- 106: (periodische) Pulsfolge
- 107: Trägersubstrat
- 201a: erster Puls der Pulsfolge (durch ersten Modulator voll gedämpfter Lichtpuls, unselektiert)
- 201b: zweiter Puls der Pulsfolge (durch ersten Modulator teilweise gedämpfter Lichtpuls, unselektiert)
- 201c: dritter Puls der Pulsfolge (ungedämpfter Lichtpuls, selektiert)
- 201d: vierter Puls der Pulsfolge (durch zweiten Modulator teilweise gedämpfter Lichtpuls, unselektiert)
- 201e: fünfter Puls der Pulsfolge (durch zweiten Modulator voll gedämpfter Lichtpuls, unselektiert)
- 202: Hüllkurve der Schaltfunktion des ersten elektro-optischen Tors
- 204: Hüllkurve der Schaltfunktion des zweiten elektro-optischen Tors
- 205: Hüllkurve der resultierenden Schaltfunktion beider Tore
- I: Intensität der Lichtstärke
- t: Zeitachse
- t₁: Zeitpunkt des ersten Pulses der Pulsfolge
- t₂: Zeitpunkt des zweiten Pulses der Pulsfolge
- t₃: Zeitpunkt des dritten Pulses der Pulsfolge
- t₄: Zeitpunkt des vierten Pulses der Pulsfolge
- t₅: Zeitpunkt des fünften Pulses der Pulsfolge
- t_{1M1}: Flankenbeginn beim ersten Modulator
- t_{2M1}: Flankenende beim ersten Modulator
- t_{3M2}: Flankenbeginn beim zweiten Modulator
- t_{4M2}: Flankenende beim zweiten Modulator
- 300: erste Treiberschaltung
- 301: zweite Treiberschaltung
- 302: erste Steuerspannung mit Rechteckpulsen
- 303: erstes elektro-optisches Tor
- 305: zweite Steuerspannung mit Rechteckpulsen
- 306: zweites elektro-optisches Tor
- 304: erstes aktives Element
- 307: zweites aktives Element
- G1: Spannungsquelle
- G2: Spannungsquelle
- R1: komplexer Widerstand
- R2: komplexer Widerstand
- Q1: Transistor
- Q2: Transistor
- G: Gate beim Transistor
- S: Source beim Transistor
- D: Drain beim Transistor

- 400: Ersatzschaltbild mit parasitärer Induktivität und Kapazität
- 401: Treiberschaltung mit Gegentakt

- 402: erste Steuerspannung mit Sinusform
- 403: erstes elektro-optisches Tor
- 404: zweite Steuerspannung mit Rechteckpulsen
- 405: aktives Element
- 406: elektro-optisches Tor

- Q21: Transistor
- Q22: Transistor
- C1: parasitäre Kapazität
- L1: parasitäre Induktivität
- 500: Substrat
- 501: Mantelschicht
- 502: Wellenleiter
- 503: aktive Schicht
- 504: Wellenleiter
- 505: Mantelschicht
- 506: Ausbreitungsrichtung der Lichtpulse
- 507: erster Modulator
- 508: Rippenwellenleiter
- 509: zweiter Modulator
- 510: Rippenwellenleiter

## Patentansprüche

1. Verfahren zur Selektion von optischen Pulsen (201a, 201b, 201c, 201d, 201e) mit verbesserter Flankensteilheit, mit folgenden Verfahrensschritten:
- Einkoppeln einer Pulsfolge (201a, 201b, 201c, 201d, 201e) in einen optischen Wellenleiter (105), der zusammen mit mindestens einer zum zeitlich versetzten Ansteuern eines ersten Modulators (101) und eines zweiten Modulators (102) ausgebildeten Steuerschaltung (300, 301, 400, 401) auf dem Trägersubstrat angeordnet ist, wobei der erste Modulator (101) und der zweite Modulator (102) entlang der Achse (104) des Wellenleiters (105) nacheinander angeordnet sind;
- steuerbares Absorbieren von Teilen der Pulsfolge (201a, 201d, 201e) im ersten elektro-optischen Modulator (101); und
- steuerbares Absorbieren von Teilen der modulierten Pulsfolge (201a, 201b, 201e) im zweiten elektro-optischen Modulator (102),
**dadurch gekennzeichnet, dass**
- der erste Modulator (101) auf Transparenz geschaltet ist, während (t_{3M2}) der zweite Modulator (102) von Absorption auf Transparenz umgeschaltet wird;
- der zweite Modulator (102) auf Transparenz geschaltet ist, während (t_{2M1}) der erste Modulator (101) von Transparenz auf Absorption umgeschaltet wird;
- eine Flanke (t₃-t_{2M1}), mit welcher der erste Modulator (101) von Transparenz auf Absorption umschaltet, steiler ist als eine Flanke (t₃-t_{4M2}), mit welcher der zweite Modulator (102) von Transparenz auf Absorption umschaltet; sowie
- eine Flanke (t_{3M2}-t₃), mit welcher der zweite Modulator (102) von Absorption auf Transparenz umschaltet, steiler ist als eine Flanke (t_{1M1}-t₃), mit welcher der erste Modulator (101) von Absorption auf Transparenz umschaltet.

2. Verfahren nach Anspruch 1, **dadurch gekennzeichnet, dass** eine periodische Pulsfolge (201a, 201b, 201c, 201d, 201e) in den optischen Wellenleiter (105) eingekoppelt wird und die Periodendauer (t₂-t₁, t₃-t₂, t₄-t₃, t₅-t₄) der Pulsfolge (201a, 201b, 201c, 201d, 201e) größer ist als der zeitliche Abstand zwischen
- einem Zeitpunkt (t_{3M2}), an dem der zweite Modulator (102) von Absorption auf Transparenz umgeschaltet wird; und
- einem Zeitpunkt (t_{2M1}), an dem der erste Modulator (101) von Transparenz auf Absorption umgeschaltet wird.

3. Verfahren nach einem der Ansprüche 1 und 2, **dadurch gekennzeichnet, dass** die Periodendauer (t₂-t₁, t₃-t₂, t₄-t₃, t₅-t₄) der Pulsfolge (201a, 201b, 201c, 201d, 201e) kleiner ist als der zeitliche Abstand zwischen
- einem Zeitpunkt (t_{1M1}), an dem der erste Modulator (101) von Absorption auf Transparenz umgeschaltet wird; und
- einem Zeitpunkt (t_{3M2}), an dem der zweite Modulator (102) von Absorption auf Transparenz umgeschaltet wird.

## Claims

1. A method for selecting optical pulses (201a, 201b, 201c, 201d, 201e) with improved edge steepness, comprising the method steps of:
- coupling a pulse sequence (201a, 201b, 201c, 201d, 201e) into an optical waveguide (105) which is arranged on the carrier substrate together with at least one control circuit (300, 301, 400, 401) designed to drive a first modulator (101) and a second modulator (102) at offset times, wherein the first modulator (101) and the second modulator (102) are arranged one after the other along the axis (104) of the waveguide (105);
- absorbing parts of the pulse sequence (201a, 201d, 201e) in the first electro-optical modulator (101) in a controllable manner; and
- absorbing parts of the modulated pulse sequence (201a, 201b, 201e) in the second electro-optical modulator (102) in a controllable manner,
**characterized in that**
- the first modulator (101) is switched to transparency while (t_{3M2}) the second modulator (102) is being switched from absorption to transparency;
- the second modulator (102) is switched to transparency while (t_{2M1}) the first modulator (101) is being switched from transparency to absorption;
- an edge (t₃-t_{2M1}) with which the first modulator (101) switches from transparency to absorption is steeper than an edge (t₃-t_{4M2}) with which the second modulator (102) switches from transparency to absorption; and
- an edge (t_{3M2}-t₃) with which the second modulator (102) switches from absorption to transparency is steeper than an edge (t_{1M1}-t₃) with which the first modulator (101) switches from absorption to transparency.

2. The method according to Claim 1, **characterized in that**
a periodic pulse sequence (201a, 201b, 201c, 201d, 201e) is coupled into the optical waveguide (105) and the period (t₂-t₁, t₃-t₂, t₄-t₃, t₅-t₄) of the pulse sequence (201a, 201b, 201c, 201d, 201e) is longer than the time interval between
- a point in time (t_{3M2}) at which the second modulator (102) is switched from absorption to transparency; and
- a point in time (t_{2M1}) at which the first modulator (101) is switched from transparency to absorption.

3. The method according to either of claims 1 and 2, **characterized in that** the period (t₂-t₁, t₃-t₂, t₄-t₃, t₅-t₄) of the pulse sequence (201a, 201b, 201c, 201d, 201e) is shorter than the time interval between
- a point in time (t_{1M1}) at which the first modulator (101) is switched from absorption to transparency; and
- a point in time (t_{3M2}) at which the second modulator (102) is switched from absorption to transparency.

## Revendications

1. Procédé de sélection d'impulsions optiques (201a, 201b, 201c, 201d, 201e) avec une pente de flancs améliorée, avec les étapes de procédé suivantes :
- injection d'un train d'impulsions (201a, 201b, 201c, 201d, 201e) dans un guide d'ondes optique (105), lequel est disposé sur le substrat support conjointement avec au moins un circuit de commande (300, 301, 400, 401) formé pour l'excitation décalée dans le temps d'un premier modulateur (101) et d'un deuxième modulateur (102), le premier modulateur (101) et le deuxième modulateur (102) étant disposés l'un après l'autre le long d'un axe (104) du guide d'ondes (105) ;
- absorption commandable de parties du train d'impulsions (201a, 201d, 201e) dans le premier modulateur électro-optique (101) ; et
- absorption commandable de parties du train d'impulsions modulé (201a, 201b, 201e) dans le deuxième modulateur électro-optique (102),
**caractérisé en ce que,**
- le premier modulateur (101) est commuté sur « transparence », pendant que (t_{3M2}) le deuxième modulateur (102) est commuté d'« absorption » à « transparence » ;
- le deuxième modulateur (102) est commuté sur « transparence », pendant que (t_{2M1}) le premier modulateur (101) est commuté de « transparence » à « absorption » ;
- un flanc (t₃-t_{2M1}), avec lequel le premier modulateur (101) est commuté de « transparence » à « absorption », est plus raide qu'un flanc (t₃-t_{4M2}), avec lequel le deuxième modulateur (102) est commuté de « transparence » à « absorption » ; ainsi qu'
- un flanc (t_{3M2}-t₃), avec lequel le deuxième modulateur (102) est commuté d'« absorption » à « transparence », est plus raide qu'un flanc (t₁ₘ₁-t₃), avec lequel le premier modulateur (101) est commuté d'« absorption » à « transparence ».

2. Procédé selon la revendication 1, **caractérisé en ce**
**qu'**un train d'impulsions périodique (201a, 201b, 201c, 201d, 201e) est injecté dans le guide d'ondes optique (105) et la durée de période (t₂-t₁, t₃-t₂, t₄-t₃, t₅-t₄) du train d'impulsions (201a, 201b, 201c, 201d, 201e) est supérieure à l'écart temporel entre
- un instant (t_{3M2}), auquel le deuxième modulateur (102) est commuté d'« absorption » à « transparence » ; et
- un instant (t_{2M1}), auquel le premier modulateur (101) est commuté de « transparence » à « absorption ».

3. Procédé selon l'une des revendications 1 et 2, **caractérisé en ce que** la durée de période (t₂-t₁, t₃-t₂, t₄-t₃, t₅-t₄) du train d'impulsions (201a, 201b, 201c, 201d, 201e) est inférieure à l'écart temporel entre
- un instant (t_{1M1}), auquel le premier modulateur (101) est commuté d'« absorption » à « transparence » ; et
- un instant (t_{3M2}), auquel le deuxième modulateur (102) est commuté d'« absorption » à « transparence ».
